# FASCICULE DE BREVET EUROPEEN

(11) **EP 1 709 335 B1**
(45) Date de publication et mention de la délivrance du brevet: **09.05.2007**
(21) Numéro de dépôt: 05717678.6
(22) Date de dépôt: 20.01.2005
(51) Int. Cl.: F15B 15/19

(54) **MICROSYSTEME PYROTECHNIQUE ET PRODEDE DE FABRICATION D UN MI CROSYSTEME**
PYROTECHNISCHES MIKROSYSTEM UND HERSTELLUNGSVERFAHREN DAFÜR
PYROTECHNIC MICROSYSTEM AND METHOD FOR MAKING SAME

(30) Priorité: 27.01.2004 FR 0400720
(43) Date de publication de la demande: 11.10.2006
(73) Titulaire: SNPE Matériaux Energétiques, 75004 Paris (FR); BIOMERIEUX, 69280 Marcy-L'Etoile (FR)
(72) Inventeur: BROYER, Patrick, F-01700 BEYNOST (FR); COLIN, Bruno, F-69280 MARCY L'ETOILE (FR); ROLLER, Denis, F-91590 LA FERTE ALAIS (FR)
(86) Numéro de dépôt international: PCT/FR2005/050034
(87) Numéro de publication internationale: WO 2005/075835

(56) Documents cités:
- EP-A- 1 344 744
- WO-A-98/22719
- WO-A-02/088551
- US-A1- 2002 088 890
- ROSSI C ET AL: "Realization, characterization of micro pyrotechnic actuators and FEM modelling of the combustion ignition" SENSORS AND ACTUATORS A, ELSEVIER SEQUOIA S.A., LAUSANNE, CH, vol. 70, no. 1-2, 1 octobre 1998 (1998-10-01), pages 141-147, XP004140124 ISSN: 0924-4247

## Description

Le domaine technique de l'invention est celui des microsystèmes dans lesquels des microactionneurs sont destinés à remplir des fonctions mécaniques, chimiques, électriques, thermiques ou fluidiques, pour des applications microélectroniques comme les puces, ou biomédicales comme les cartes d'analyse intégrant la microfluidique ou de synthèse chimique comme les microréacteurs.

Les microactionneurs sont des objets miniaturisés, ayant des dimensions de l'ordre du millimètre. Ils sont réalisés dans des supports solides pouvant être semi-conducteurs ou isolants, dans le but de former des microsystèmes comme, par exemple, des microvannes ou des micropompes dans des microcircuits de fluide, ou des microinterrupteurs dans des microcircuits électroniques.

Des microactionneurs utilisant des effets électrostatique, piézoélectrique, électromagnétique et bimétallique existent depuis quelque temps déjà. Une nouvelle génération de microactionneurs commence à faire son apparition : ceux utilisant l'effet pyrotechnique. Les matériaux pyrotechniques ont une densité énergétique élevée, leur utilisation dans des microactionneurs permet donc de réduire considérablement la dimension des microsystèmes intégrant de tels microactionneurs. De tels microactionneurs pyrotechniques sont par exemple décrits dans la demande de brevet WO 02/088551.

Dans cette demande de brevet, le fonctionnement d'un microactionneur pyrotechnique est obtenu en provoquant la combustion d'une micro-charge pyrotechnique, généralement en élevant localement sa température jusqu'à un seuil de décomposition au moyen d'un dispositif d'initiation. Les gaz générés par la combustion de la micro-charge pyrotechnique ont un effet déterminé. Cet effet peut consister par exemple comme dans la demande précitée à déformer une membrane délimitant la chambre de combustion de la micro-charge pyrotechnique. Dans un microsystème déterminé, comme par exemple dans une microvanne, cette membrane, en se déformant, aura par exemple pour fonction de venir fermer un circuit de fluide entre deux canalisations. Dans un microsystème, le nombre de microactionneurs utilisés peut être très élevé et atteindre plusieurs centaines.

En général, la micro-charge pyrotechnique est placée en contact avec des moyens d'initiation. C'est le cas dans la demande de brevet précitée n°WO 02/088551 mais également dans le cas de la demande de brevet WO 98/22719. Dans cette demande WO 98/22719, la micro-charge pyrotechnique est déposée entre deux contacts métalliques sur un support d'un circuit imprimé par lequel est amené le courant d'initiation de la charge pyrotechnique. Une résistance de surface moins étendue que celle de la charge est déposée sur la charge pyrotechnique à initier et relie les deux contacts métalliques.

Pour un fonctionnement correct d'un microactionneur ou d'un microsystème, on s'est aperçu que la quantité de matériau pyrotechnique brûlée lors du fonctionnement doit être maîtrisée. Cela peut évidemment s'obtenir en maîtrisant, d'une part, la quantité de matériau pyrotechnique utilisée et d'autre part le positionnement du dépôt pyrotechnique par rapport aux moyens d'initiation. Cependant, la maîtrise de ces deux paramètres peut s'avérer difficile et contraignante notamment dans le cas où les microsystèmes sont fabriqués industriellement à haute cadence. En effet, le positionnement des dépôts sur leur support dépend notamment des tolérances de réalisation du support, des tolérances de positionnement de ce support sur la machine de dépose et des tolérances de la machine elle-même. Sur des objets miniaturisés, tels que des microsystèmes, un écart dans le positionnement de la matière pyrotechnique par rapport à son moyen d'initiation peut entraîner un dysfonctionnement.

Un but de l'invention est de pouvoir s'affranchir des difficultés et contraintes dans la fabrication d'un microsystème disposant de plusieurs dépôts de matière pyrotechnique.

Ce but est atteint par un microsystème pyrotechnique comportant un substrat présentant au moins deux zones d'initiation électriques distinctes d'un matériau pyrotechnique déposé sur le substrat, ce microsystème étant caractérisé en ce qu'un même dépôt de matériau pyrotechnique recouvre les deux zones d'initiation, ledit dépôt, réalisé sur le substrat, étant à une épaisseur suffisamment faible pour que l'initiation du matériau en une zone d'initiation reste localisée et ne se propage pas jusqu'à l'autre zone d'initiation, mais suffisante pour générer une quantité de gaz déterminée.

Selon l'invention, la contrainte de devoir obtenir un dépôt parfaitement localisé au niveau de la zone d'initiation est donc éliminée. La production industrielle pourra donc être facilitée et sera moins dépendante des diverses tolérances des machines intervenant dans la fabrication.

Selon une particularité, le dépôt de matériau pyrotechnique est réalisé à une épaisseur inférieure à 100µm. Avec une telle épaisseur, le matériau pyrotechnique peut être déposé en couche entière et la combustion autour d'une zone d'initiation sur ce dépôt ne se propage pas au-delà, jusqu'à la zone d'initiation adjacente.

Selon une autre particularité, le substrat est réalisé à partir d'un assemblage de couches superposées.

Selon une autre particularité, le dépôt de matériau pyrotechnique constitue l'une des couches superposées. Selon l'invention, la production industrielle d'un tel microsystème se trouve facilitée car il suffit de superposer des couches successives. Les contraintes de positionnement du dépôt pyrotechnique par rapport aux différentes zones d'initiation sont fortement réduites.

Selon une autre particularité, le dépôt de matériau pyrotechnique sert d'adhésif pour l'assemblage entre une couche située au-dessus dudit dépôt et une couche située au-dessous dudit dépôt

Selon une autre particularité, le matériau pyrotechnique déposé se présente sous la forme d'un vernis à base de nitrocellulose.

Selon une autre particularité, le vernis est déposé à une épaisseur comprise, après séchage, entre 5 et 40 µm.

Selon une autre particularité, chacune des zones d'initiation peut être réalisée à partir d'une résistance électrique sur le substrat.

Selon une autre particularité, chacune des zones d'initiation peut être réalisée au niveau du point de contact d'un doigt conducteur, relié à un générateur électrique, sur le substrat en matière métallique également relié audit générateur.

Selon une autre particularité, le microsystème comporte une membrane déformable délimitant partiellement une chambre de combustion destinée à recevoir les gaz générés par au moins une partie du dépôt de matériau pyrotechnique en contact avec l'une des zones d'initiation.

Selon une autre particularité, le microsystème comprend une couche à travers laquelle est formé un orifice formant la chambre de combustion, ladite couche étant prise entre la membrane, formant elle-même une couche, et le dépôt de matériau pyrotechnique.

Un autre but de l'invention est de proposer un procédé de fabrication d'un microsystème tel que celui présenté ci-dessus.

Ce but est atteint par un procédé de fabrication d'un microsystème comportant une pluralité de microactionneurs pyrotechniques adjacents établis sur un substrat, chaque microactionneur étant apte à avoir un effet déterminé grâce aux gaz générés par la combustion d'un matériau pyrotechnique initié à partir d'une zone d'initiation électrique associée à chaque microactionneur, caractérisé en ce qu'une couche d'un matériau pyrotechnique commune à tous les microactionneurs est déposée sur le substrat à une épaisseur suffisamment faible pour que l'initiation du matériau pyrotechnique en une zone d'initiation reste localisée et ne se propage pas jusqu'à une autre zone d'initiation, mais suffisante pour générer une quantité de gaz déterminée.

Selon une particularité, le procédé consiste uniquement en un empilement de couches superposées, la couche de matériau pyrotechnique constituant l'une des couches de l'empilement.

Selon une autre particularité, la couche de matériau pyrotechnique est déposée à une épaisseur inférieure à 100µm.

Selon une autre particularité, la couche de matériau pyrotechnique est déposée par enduction, sérigraphie, tampographie, trempage ou par pulvérisation.

L'invention, avec ses caractéristiques et avantages, ressortira plus clairement à la lecture de la description faite en référence aux dessins annexés dans lesquels :
La figure 1 représente schématiquement, en coupe axiale longitudinale, un microactionneur.
La figure 2 représente schématiquement, en coupe axiale longitudinale, une microvanne dans laquelle un microactionneur permet de réaliser un cycle de fermeture/ouverture du circuit fluidique.
La figure 3 représente schématiquement une microvanne selon un autre mode de réalisation.
La figure 4 représente schématiquement, en coupe axiale longitudinale, un microsystème composé d'une pluralité de microactionneurs sur lequel vient s'adapter un dispositif d'initiation électrique.

Dans l'ensemble de la description, les expressions "matière pyrotechnique" et "matériau pyrotechnique" ont la même signification.

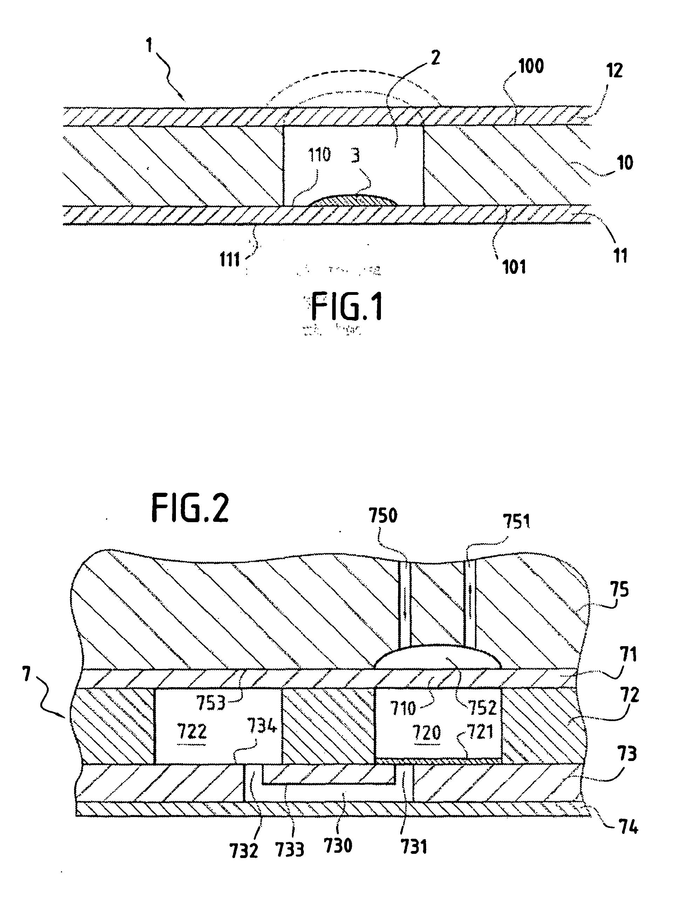

L'invention va à présent être décrite en liaison avec les figures 1 à 4.

En référence à la figure 1, un microactionneur 1 pyrotechnique comprend typiquement une chambre 2 par exemple de forme cylindrique réalisée dans un support en polycarbonate. Ledit support résulte par exemple comme représenté en figure 1 d'un empilement de feuilles ou couches assemblées les unes sur les autres, par exemple par collage, par soudage par laser ou par thermocompression, par laminage à chaud ou par tout autre moyen approprié. Un microactionneur 1 pyrotechnique simple tel que celui représenté en figure 1 comporte trois couches 10, 11, 12 superposées. La couche centrale 10 est percée transversalement d'un trou qui est recouvert par la couche dite supérieure 12 fixée sur une première face de la couche centrale et dite face supérieure 100 et par la couche dite couche inférieure 11 fixée sur la face opposée à la face supérieure 100 de la couche centrale 10, dite face inférieure 101. Les parois latérales de ce trou délimitent donc, avec la couche supérieure 12 et la couche inférieure 11, la chambre 2 dite de combustion. Le diamètre de la chambre 2 de combustion ainsi formée est par exemple de 1 mm. Dans cette chambre 2 de combustion est placée une micro-charge 3 pyrotechnique. Préférentiellement, la chambre 2 définit un espace hermétique.

La couche supérieure 12 est constituée d'une membrane déformable assemblée sur la face supérieure 100 de la couche centrale 10. Cette membrane sera par exemple en matériau plastique et/ou élastique, par exemple en PTFE (ou Téflon, marque déposée), en caoutchouc, en élastomère, en PVDC (Polychlorure de vinylidène) ou PVDF (Polyfluorure de vinylidène).

Selon l'invention, la micro-charge 3 pyrotechnique est déposée dans la chambre 2 de combustion sur la face de la couche inférieure 11 qui est en contact avec la couche centrale 10. Cette face de la couche 11 conductrice est dite face supérieure 110. La micro-charge 3 pyrotechnique peut être déposée par exemple sous la forme d'un film par exemple discoïde ayant une épaisseur comprise entre 1 µm et 100 µm.

Le mode de fonctionnement de ce microactionneur 1 est le suivant. Un courant électrique est délivré dans un moyen d'initiation formant une zone d'initiation constituée par exemple d'une piste conductrice chauffante présentant une partie résistive ou d'un fil résistif chauffant. La température dans ce moyen d'initiation s'élève jusqu'à atteindre la température d'inflammation de la composition pyrotechnique 3. La combustion de ladite composition 3 entraîne la production de gaz ce qui crée une surpression dans la chambre 2. La membrane 12 qui est ainsi sollicitée réagit en se déformant.

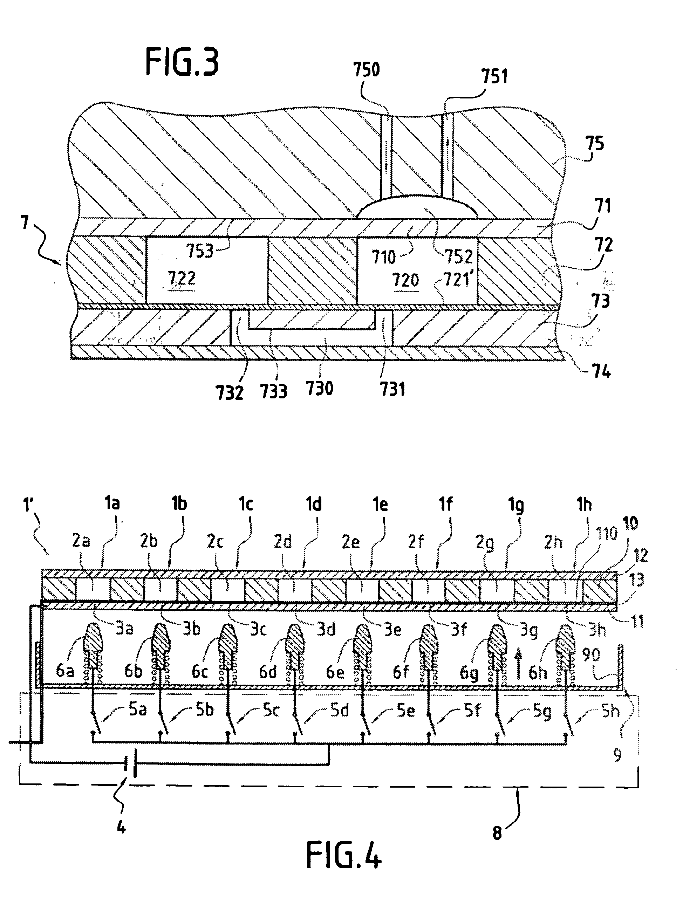

La figure 2 représente un microactionneur 7 amélioré permettant d'obtenir une déformation de la membrane comme décrit ci-dessus en référence à la figure 1 et également une réduction de cette déformation. Sur les figures 2 et 3, ce microactionneur 7 joue le rôle d'une microvanne dans un microcircuit de fluide. Le microactionneur 7 est constitué de quatre couches superposées 71, 72, 73 et 74, dite respectivement première couche, deuxième couche, troisième couche et quatrième couche. Les deuxième, troisième et quatrième couches 72, 73, 74 constituent le support et sont par exemple en polycarbonate. La première couche 71 est en matériau plastique et/ou élastique, par exemple en téflon (marque déposée), en latex, en PVDC (Polychlorure de vinylidène) ou PVDF (Polyfluorure de vinylidène). Sur la première couche 71 du microactionneur 7 est présente une cinquième couche 75 constituant le microcircuit de fluide. Cette cinquième couche 75 constituée par le microcircuit de fluide est traversée transversalement par deux canalisations 750 et 751. Les deux canalisations 750 et 751 comportent une extrémité débouchant dans un évidement 752 formé sur la face 753 de cette cinquième couche 75, dite face inférieure, située en vis-à-vis de la première couche 71 du microactionneur 7. Les deux canalisations 750 et 751 communiquent donc par l'intermédiaire de l'évidement 752. Une première canalisation 750 constitue par exemple une arrivée de fluide vers l'évidement 752 et la deuxième canalisation 751 constitue une sortie de fluide hors de l'évidement 752. L'ensemble du microactionneur 7 et du microcircuit de fluide forme un microsystème.

La première couche 71 du microactionneur 7 constitue une membrane 710 déformable telle que celle décrite sous la référence 12 à la figure 1. La membrane 710 étant fixée sur la face inférieure 753 de la cinquième couche 75, par exemple par collage, la déformation de la membrane 710 n'est possible que dans l'évidement 752 de la cinquième couche 75.

La deuxième couche 72 est constituée d'une feuille percée transversalement de deux trous et d'épaisseur par exemple égale à 0,5 mm. Les parois latérales d'un premier trou délimitent avec la première couche 71 située au-dessus et avec la troisième couche 73 située au-dessous, la chambre 720 de combustion principale du microactionneur.

La chambre principale 720 aura par exemple un diamètre de 1 mm. Les parois latérales d'un deuxième trou délimitent avec la première couche 71 située au-dessus et avec la troisième couche 73 située au-dessous une chambre secondaire ou réservoir 722 dont le rôle sera explicité ci-dessous. Cette chambre secondaire 722 aura par exemple un diamètre égal à 2 mm.

La troisième couche 73 est constituée d'une feuille à travers laquelle est formée une canalisation 730 en forme de U dont chacune des extrémités débouche dans une des chambres 720 et 722 de la deuxième couche 72. Cette canalisation 730 est constituée d'un canal 733 creusé sur la face de la troisième couche 73 située en vis-à-vis de la quatrième couche 74 et recouvert par la quatrième couche 74 du microactionneur 7. Chaque extrémité du canal 733 se prolonge perpendiculairement par un conduit 731 et 732, chacun des conduits 731 et 732 débouchant dans une chambre 720 et 722 de la deuxième couche 72 du microactionneur. Cette quatrième couche 74 est constituée d'un film d'étanchéité recouvrant la canalisation 730.

Selon l'invention, un dépôt 721 de matière pyrotechnique est réalisé dans la chambre de combustion principale 720 sur la face supérieure de la troisième couche 73. Ce dépôt 721 de matière pyrotechnique obture donc le conduit 731 de la canalisation 730 formée dans la troisième couche 73. Selon l'invention, on a remarqué qu'avec une épaisseur de dépôt suffisamment faible mais suffisante pour générer la quantité de gaz souhaitée, la combustion du matériau pyrotechnique se limitait à une zone réduite située autour du point d'initiation. De ce fait, un même dépôt de matière pyrotechnique peut être initié à plusieurs endroits distincts et à des moments différents pour générer plusieurs fois dans la chambre de combustion une quantité de gaz nécessaire pour obtenir un effet déterminé. Par conséquent, en référencera la figure 2, le dépôt 721 de matière pyrotechnique réalisé dans la chambre de combustion principale 720 sur toute la surface de la face supérieure de la troisième couche 73 pourra par exemple être initié à deux endroits distincts.

Selon l'invention, l'initiation en deux points ou zones du dépôt 721 de matière pyrotechnique peut être réalisée à l'aide de moyens différents. L'un de ces moyens consiste par exemple à utiliser un fil résistif chauffant sur lequel est déposé le matériau pyrotechnique. Un autre de ces moyens consiste par exemple à utiliser des pistes d'initiation déposées par exemple par sérigraphie sur la face supérieure 734 de la troisième couche 73. La piste comporte alors une partie résistive constituant une zone d'initiation par laquelle se produit l'initiation.

Une microvanne telle que représentée en figure 2 fonctionne donc de la manière suivante. Un courant électrique est délivré dans un fil résistif chauffant ou une partie résistive d'une piste conductrice jusqu'à ce que la température atteinte soit suffisante pour l'inflammation d'une première partie du dépôt 721 de matériau pyrotechnique. Selon l'invention, l'épaisseur de dépôt 721 étant suffisamment faible, l'inflammation du dépôt 721 reste localisée et ne se répand pas sur l'ensemble du dépôt 721 de matière pyrotechnique. Selon l'invention, le dépôt 721 est brûlé sur une zone différente de celle permettant l'obturation de la canalisation 730 d'évacuation, de manière à ce que les gaz produits restent dans la chambre de combustion principale 720. La combustion de cette première partie du dépôt pyrotechnique 721 entraîne la production de gaz dans la chambre de combustion principale 720 de manière à créer une surpression dans cette chambre 720. La surpression dans la chambre 720 entraîne la déformation de la membrane 710. La déformation de la membrane 710, en réponse à la pression des gaz, n'est possible qu'en direction de l'évidement 752 formé dans la cinquième couche 75. La membrane vient donc se déformer jusqu'à venir se plaquer au fond de l'évidement 752 et ainsi: s'interposer entre les deux canalisations 750 et 751 du microcircuit de fluide. Le microcircuit de fluide est donc fermé et cette fermeture est maintenue grâce à la pression dés gaz contenus dans la chambre principale 720 sur la membrane 710 déformable. La pression des gaz contenus dans la chambre principale 720 est suffisante pour plaquer la membrane 710 au fond de l'évidement 752 et supérieure à la contre-pression exercée sur la membrane 710 par le fluide contenu dans le microcircuit de manière à maintenir la membrane 710 au fond de l'évidement 752.

Une deuxième partie du dépôt 721 pyrotechnique non brûlée obture donc toujours le conduit 731 de la canalisation 730 reliant les deux chambres 720 et 722. La combustion de cette deuxième partie du dépôt 721 pyrotechnique, provoquée par des moyens d'initiation du type de ceux présentés ci-dessus, c'est-à-dire un fil chauffant ou la partie résistive d'une piste conductrice d'initiation, permet de dégager l'entrée de la canalisation 730 reliant les deux chambres 720 et 722. La chambre secondaire 722 étant à une pression inférieure à la pression régnant dans la chambre principale 720, les gaz générés par la combustion de la première partie du dépôt 721 pyrotechnique ainsi que par la combustion de cette deuxième partie du dépôt 721 obturant la canalisation 730 peuvent se répandre par la canalisation 730 dans la chambre secondaire 722. Le volume de la chambre secondaire 722 est suffisant pour obtenir une pression des gaz entre les deux chambres 720, 722 qui est inférieure à la contre-pression exercée sur la membrane 710 par le fluide compris dans le microcircuit. Ainsi, lors de la détente des gaz provoquée par l'ouverture de la canalisation, on obtient une réduction de la déformation de la membrane 710 suffisante pour libérer les orifices formés par les canalisations 750, 751 du microcircuit de fluide. Cette déformation de la membrane 710, vers l'extérieur de l'évidement 752, provoque l'ouverture de la vanne et donc la mise en communication des deux canalisations 750 et 751 du microcircuit de fluide.

Selon une variante de réalisation, il serait également possible de purger les gaz contenus dans la chambre principale 720 directement vers l'extérieur du dispositif en mettant la chambre principale 720 en communication avec l'air libre. Selon cette variante, puisque tous les gaz sont évacués de la chambre principale 720, la membrane 710, si elle est élastique, revient dans sa position initiale.

Selon un autre mode de réalisation représenté en figure 3, le dépôt 721' de matériau pyrotechnique est réalisé sur toute la surface de la face supérieure de la troisième couche 73. Le dépôt 721' de matière pyrotechnique constitue donc une couche à part entière située entre la deuxième couche 72 et la troisième couche 73. Selon l'invention, l'initiation en différents points de cette couche pyrotechnique est donc possible. Comme décrit ci-dessus, une première initiation permet de déformer la membrane 710 dans un sens tandis qu'une autre initiation à l'entrée et à la sortie de la canalisation permet l'évacuation des gaz vers la chambre secondaire 722 et la déformation de la membrane 710 dans l'autre sens. Enfin, l'initiation d'une autre partie de la couche de matière pyrotechnique dans une zone située par exemple dans la chambre de combustion principale 720 ou la chambre secondaire 722 permet d'obtenir une nouvelle surpression dans les chambres principale 720 et secondaire 722 et ainsi une nouvelle déformation de la membrane 710. Il est ainsi possible de réaliser un cycle fermeture/ouverture/fermeture du circuit de fluide.

Un microsystème est un dispositif multifonctionnel miniaturisé dont les dimensions maximales n'excèdent pas quelques millimètres. Dans le cadre d'un microcircuit de fluide, un microsystème peut, par exemple, être une microvanne ou une micropompe, et dans le cadre d'un microcircuit électronique, un microinterrupteur ou un microcommutateur.

En référence à la figure 4, un microsystème 1', se présentant par exemple sous la forme d'une carte, comporte une pluralité de microactionneurs (1a,...,1h) adjacents identiques à celui décrit en référence à a figure 1. Ces microactionneurs (1a,...,1h) sont tous formés dans un même support par l'empilement des trois couches 10, 11, 12 définies ci-dessus, c'est-à-dire par une couche centrale 10 prise entré une membrane formant la couche supérieure 12 et une couche inférieure 11. La chambre (2a,...,2h) de combustion de chacun des microactionneurs (1a,...,1h) est donc délimitée par les parois latérales d'un trou formé à travers la couche 10 centrale et par la couche supérieure 12 formant la membrane déformable située au-dessus et la couche inférieure 11 située au-dessous.

Selon l'invention, à la différence du microactionneur présenté en figure 1, une micro-charge pyrotechnique n'est pas déposée dans chacune des chambres (2a,...,2h) de combustion des microactionneurs (1a,...,1h). Selon l'invention, le dépôt 13 de matière pyrotechnique permettant de gonfler la membrane 12 au niveau de chacun des microactionneurs (1a,...,1h) est commun à tous les microactionneurs (1a,...,1h). Selon l'invention, un tel dépôt 13 pyrotechnique représente une couche unique 13 située entre la couche centrale 10 et la couche inférieure 11. Selon l'invention, étant donné que la combustion du dépôt 13 est localisée et ne se propage pas à tout le dépôt 13, l'initiation peut donc être effectuée en différents points de la couche et à des instants différents. A partir de la même couche 13 de matière pyrotechnique commune à tous les microactionneurs (1a,...,1h), il est possible d'actionner indifféremment chacun de ces microactionneurs (1a,...,1h). Pour cela, l'épaisseur du dépôt 13 de matière pyrotechnique doit être suffisamment faible afin d'éviter que, dans une chambre (2a,...,2h) de combustion d'un microactionneur (1a,...,1h), la combustion se propage au-delà d'une certaine zone et provoque la mise sous pression de la chambre de combustion d'un microactionneur adjacent. La combustion du dépôt ne doit donc pas se propager au-delà de la chambre (2a,...,2h) de combustion du microactionneur qui a été activé.

Le microsystème 1' représenté en figure 4 utilise par exemple un dispositif d'initiation particulier comportant plusieurs doigts (6a,...,6h) conducteurs identiques se dressant parallèlement entre eux et perpendiculairement à un plan défini sur un élément 9 support. Chacun de ces doigts (6a,...,6h) est monté sur un ressort (7a,...,7h) et relié électriquement à une centrale 8 de commande. Les axes des ressorts (7a,...,7h) sont parallèles entre eux et perpendiculaires au plan défini sur l'élément 9 support. Les doigts (6a,...,6h) sont reliés électriquement en parallèle à une borne d'une source 4 de courant de la centrale 8 de commande. La centrale 8 commande une pluralité d'interrupteurs (5a,...,5h), chaque doigt (6a,...,6h) conducteur étant associé à l'un de ces interrupteurs (5a,...,5h). Ainsi la centrale 8 de commande peut, en fermant certains interrupteurs (5a,...,5h), sélectionner les microactionneurs (1a,...,1h) à activer. La centrale 8 de commande comporte donc des moyens de sélection lui permettant de sélectionner les interrupteurs à fermer en fonction des microactionneurs (1a,...,1h) qu'il est nécessaire d'activer. Selon l'invention, l'élément 9 support vient s'adapter sur le microsystème 1' de sorte qu'un doigt (6a,...,6h) conducteur soit associé à chaque microactionneur (1a,...,1h) du microsystème 1'. Lorsque l'élément 9 support est adapté sur le microsystème 1', les doigts (6a,...,6h) conducteurs sont maintenus en contact avec la couche inférieure 11 du microsystème 1', chacun à l'aide de leur ressort (7a,...,7h). Les doigts (6a,...,6h) conducteurs sont placés sur l'élément 9 support de manière à venir chacun au contact de la face inférieure 111 de la couche inférieure 11, juste au-dessous de la chambre (2a,...,2h) de combustion d'un microactionneur (1a,...,1h). L'élément 9 support comporte par exemple une couronne 90 périphérique lui permettant de venir s'adapter sur le microsystème 1'. L'assemblage entre les deux éléments est effectué par exemple suivant les flèches représentées sur la figure 4 et la liaison entre le microsystème 1' et l'élément 9 support pourra être réalisée par exemple par clipsage.

Selon l'invention, la centrale 8 de commande pourra être intégrée à l'élément 9 support de manière à constituer un dispositif d'initiation complet adaptable sur le microsystème 1'.

Selon l'invention, la couche inférieure 11 est une couche conductrice de l'électricité. La couche 13 de matière pyrotechnique est déposée sur la face supérieure 110 de la couche inférieure conductrice. Chaque doigt (6a,...,6h) conducteur, en contact avec la couche inférieure 11 conductrice, lorsqu'il est sélectionné par la centrale 8 de commande, permet de créer un échauffement localisé de la couche inférieure 11 conductrice et de provoquer l'initiation de la partie du dépôt 13 de matière pyrotechnique située juste au-dessus du doigt pour obtenir ainsi, sous l'action des gaz de combustion, la déformation ponctuelle, au niveau du microactionneur (1a,...,1h) sélectionné et activé, de la couche supérieure 12 formant la membrane.

Selon l'invention, dans les différents modes de réalisation décrits ci-dessus, la présence des parois latérales d'une chambre (2a,...,2h, 720) de combustion peut favoriser l'extinction du dépôt 13 autour de la zone d'initiation et permettre la non-propagation de la combustion du dépôt aux chambres (2a,...,2h, 722) de combustion adjacentes.

Le dépôt de matière pyrotechnique effectué uniquement dans la chambre de combustion principale 720 (721, figure 2) ou effectué en couche complète (721', figure 3 ou 13, figure 4) peut être réalisé à une épaisseur inférieure à 100µm. L'épaisseur de dépôt 721, 721', 13 doit être suffisamment faible pour éviter que la combustion ne se propage au-delà d'une zone limitée située autour de la zone d'initiation. Cependant, cette épaisseur de dépôt 721, 721', 13 doit être suffisante pour générer la quantité de gaz nécessaire à l'obtention de l'effet désiré. La quantité de gaz générée dépend en outre notamment du pouvoir énergétique du matériau pyrotechnique utilisé, ainsi que de la géométrie du dispositif d'initiation. La quantité de gaz dégagée est donc maîtrisée en jouant sur l'épaisseur du dépôt de matière pyrotechnique, sur la nature du matériau pyrotechnique utilisé ainsi que sur la géométrie du dispositif d'initiation. Plus le pouvoir énergétique du matériau est grand, plus l'épaisseur de dépôt pourra être réduite. De plus, selon la géométrie du dispositif d'initiation, une surface plus ou moins grande du dépôt de la matière pyrotechnique peut être initiée, ce qui permet de générer plus ou moins de gaz.

Le matériau pyrotechnique utilisé pour le dépôt peut être un vernis à base de nitrocellulose. Dans ce cas, l'épaisseur du dépôt pour faire fonctionner un microactionneur du type de celui de la figure 1 ou 2 pourra être comprise, après séchage, entre 5 et 40µm et préférentiellement entre 10 et 20 µm.

Selon l'invention, le dépôt en couche sur l'ensemble d'un support peut être effectué par diverses techniques comme par exemple l'enduction, la sérigraphie, la tampographie, le trempage ou la pulvérisation. Les vernis à base de nitrocellulose ont en particulier des propriétés filmogènes bien adaptées à l'enduction sur un support déterminé.

Selon l'invention, dans le cas de la figure 3 ou de la figure 4, la couche 721', 13 de matière pyrotechnique peut avoir une fonction adhésive permettant ou facilitant l'assemblage entre la couche située au-dessus 72, 10 et la couche située au-dessous 73, 11.

## Revendications

1. Microsystème (7, 1') pyrotechnique comportant un substrat présentant au moins deux zones d'initiation électriques distinctes d'un matériau pyrotechnique déposé sur le substrat, **caractérisé en ce qu'**un même dépôt (721, 721', 13) de matériau pyrotechnique recouvre les deux zones d'initiation, ledit dépôt (721, 721', 13), réalisé sur le substrat, étant à une épaisseur suffisamment faible pour que l'initiation du matériau pyrotechnique au niveau d'une zone d'initiation reste localisée et ne se propage pas jusqu'à l'autre zone d'initiation, mais suffisante pour générer une quantité de gaz déterminée.

2. Microsystème (7, 1') selon la revendication 1, **caractérisé en ce que** le dépôt (721, 721', 13) de matériau pyrotechnique est réalisé à une épaisseur inférieure à 100µm.

3. Microsystème (7, 1') selon la revendication 1 ou 2, **caractérisé en ce que** le substrat est réalisé à partir d'un assemblage de couches (71, 72, 73, 74 et 10, 11, 12) superposées.

4. Microsystème (7, 1') selon la revendication 3, **caractérisé en ce que** le dépôt (721', 13) de matériau pyrotechnique constitue l'une des couches (71, 72, 73, 74 et 10, 11, 12) superposées.

5. Microsystème (7, 1') selon la revendication 4, **caractérisé en ce que** le dépôt (721', 13) de matériau pyrotechnique sert d'adhésif pour l'assemblage entre une couche située au-dessus (72, 10) dudit dépôt (721', 13) et une couche située au-dessous (73, 11) dudit dépôt (721', 13).

6. Microsystème (7, 1') selon la revendication 1, **caractérisé en ce que** le matériau pyrotechnique déposé se présente sous la forme d'un vernis à base de nitrocellulose.

7. Microsystème (7, 1') selon la revendication 6, **caractérisé en ce que** le vernis est déposé à une épaisseur comprise après séchage entre 5 et 40 µm

8. Microsystème (7, 1') selon la revendication 1, **caractérisé en ce que** chacune des zones d'initiation peut être réalisée à partir d'une résistance électrique sur le substrat.

9. Microsystème (7, 1') selon la revendication 1, **caractérisé en ce que** chacune des zones d'initiation peut être réalisée au niveau du point de contact d'un doigt (6a,...,6h) conducteur, relié à un générateur (4) électrique, sur le substrat en matière métallique également relié audit générateur (4).

10. Microsystème (7, 1') selon la revendication 3, **caractérisé en ce qu'**il comporte une membrane (710, 12) déformable délimitant partiellement une chambre de combustion (720, 2a,...,2h) destinée à recevoir les gaz générés par au moins une partie du dépôt (721, 721', 13) de matériau pyrotechnique en contact avec l'une des zones d'initiation.

11. Microsystème (7, 1') selon la revendication 10, **caractérisé en ce qu'**il comprend une couche (72, 10) à travers laquelle est formé un orifice formant la chambre (720, 2a,...,2h) de combustion, ladite couche (72, 10) étant prise entre la membrane (710, 12), formant elle-même une couche, et le dépôt de matière pyrotechnique (721', 13).

12. Procédé de fabrication d'un microsystème (1') comportant une pluralité de microactionneurs (1a,...,1h) pyrotechniques adjacents établis sur un substrat, chaque microactionneur (1a,...,1h) étant apte à avoir un effet déterminé grâce aux gaz générés par la combustion d'un matériau pyrotechnique initié à partir d'une zone d'initiation électrique associée à chaque microactionneur (1a,...,1h), **caractérisé en ce qu'**une couche (13) de matériau pyrotechnique, commune à tous les microactionneurs (1a,...,1h), est déposée sur le substrat à une épaisseur suffisamment faible pour que l'initiation de la matière pyrotechnique en une zone d'initiation reste localisée et ne se propage pas jusqu'à l'autre zone d'initiation, mais suffisante pour générer une quantité de gaz déterminée.

13. Procédé selon la revendication 12, **caractérisé en ce qu'**il consiste uniquement en un empilement de couches (10, 11, 12) superposées, la couche (13) de matériau pyrotechnique constituant l'une des couches de l'empilement.

14. Procédé selon la revendication 12 ou 13, **caractérisé en ce que** la couche (13) de matériau pyrotechnique est déposée à une épaisseur inférieure à 100 µm.

15. Procédé selon l'une des revendications 12 à 14, **caractérisé en ce que** la couche (13) de matériau pyrotechnique est déposée par enduction, sérigraphie, tampographie, trempage ou par pulvérisation.

## Claims

1. A pyrotechnic microsystem (7, 1') comprising a substrate having at least two separate electrical initiation zones of a pyrotechnic material deposited on the substrate, **characterized in that** the same pyrotechnic material deposit (721, 721', 13) covers both initiation zones, said deposit (721, 721', 13) produced on the substrate having a thickness sufficiently small for the initiation of the pyrotechnic material at one initiation zone to remain localized and not propagate to the other initiation zone, but sufficient to generate a specific gas quantity.

2. The microsystem (7, 1') as claimed in claim 1, **characterized in that** the pyrotechnic material deposit (721, 721', 13) is produced with a thickness of less than 100 µm.

3. The microsystem (7, 1') as claimed in claim 1 or 2, **characterized in that** the substrate is produced from an assembly of superimposed layers (71, 72, 73, 74 and 10, 11, 12).

4. The microsystem (7, 1') as claimed in claim 3, **characterized in that** the pyrotechnic material deposit (721', 13) constitutes one of the superimposed layers (71, 72, 73, 74 and 10, 11, 12).

5. The microsystem (7, 1') as claimed in claim 4, **characterized in that** the pyrotechnic material deposit (721', 13) is used as an adhesive for assembly between a layer (72, 10) lying above said deposit (721', 13) and a layer (73, 11) lying below said deposit (721', 13).

6. The microsystem (7, 1') as claimed in claim 1, **characterized in that** the deposited pyrotechnic material is in the form of a nitrocellulose-based varnish.

7. The microsystem (7, 1') as claimed in claim 6, **characterized in that** the varnish is deposited with a thickness of between 5 and 40 µm after drying.

8. The microsystem (7, 1') as claimed in claim 1, **characterized in that** each of the initiation zones can be produced from an electrical resistance on the substrate.

9. The microsystem (7, 1') as claimed in claim 1, **characterized in that** each of the initiation zones can be produced at the point of contact of a conductive finger (6a,...,6h), connected to an electrical generator (4) on the substrate made of metallic substance, which is also connected to said generator (4).

10. The microsystem (7, 1') as claimed in claim 3, **characterized in that** it comprises a deformable membrane (710, 12) partially delimiting a combustion chamber (720, 2a,..., 2h) intended to receive the gases generated by at least one part of the pyrotechnic material deposit (721, 721', 13) in contact with one of the initiation zones.

11. The microsystem (7, 1') as claimed in claim 10, **characterized in that** it comprises a layer (72, 10) through which an orifice forming the combustion chamber (720, 2a,..., 2h) is formed, said layer (72, 10) being held between the membrane (710, 12), itself forming a layer, and the pyrotechnic substance deposit (721', 13).

12. A method for fabricating a microsystem (1') comprising a plurality of adjacent microactuators (1a,...,1h) established on a substrate, each microactuator (1a,...,1h) being capable of having a specific effect owing to the gases generated by the combustion of a pyrotechnic material initiated from an electrical initiation zone associated with each microactuator (1a,...,1h), **characterized in that** a pyrotechnic material layer (13) common to all the microactuators (1a,...,1h) is deposited on the substrate with a thickness sufficiently small for the initiation of the pyrotechnic substance in one initiation zone to remain localized and not propagate to the other initiation zone, but sufficient to generate a specific gas quantity.

13. The method as claimed in claim 12, **characterized in that** it consists only in stacking superimposed layers (10, 11, 12), the pyrotechnic material layer (13) constituting one of the layers of the stack.

14. The method as claimed in claim 12 or 13, **characterized in that** the pyrotechnic material layer (13) is deposited with a thickness of less than 100 µm.

15. The method as claimed in one of claims 12 to 14, **characterized in that** the pyrotechnic material layer (13) is deposited by coating, screen printing, pad printing, immersion or by spraying.

## Patentansprüche

1. Pyrotechnisches Mikrosystem (7, 1') mit einem Substrat, das mindestens zwei getrennte elektrische Initialzündungszonen eines auf das Substrat aufgebrachten pyrotechnischen Materials aufweist, **dadurch gekennzeichnet, dass** die gleiche Beschichtung (721, 721', 13) aus pyrotechnischem Material die beiden Initialzündzonen bedeckt, wobei die auf dem Substrat hergestellte Beschichtung (721, 721', 13) eine ausreichend geringe Stärke hat, damit die Initialzündung des pyrotechnischen Materials in Höhe einer Initialzündungszone lokalisiert bleibt und sich nicht bis zur anderen Initialzündungszone ausbreitet, aber ausreichend ist, um eine bestimmte Menge an Gas zu erzeugen.

2. Mikrosystem (7, 1') nach Anspruch 1, **dadurch gekennzeichnet, dass** die Beschichtung (721 , 721', 13) aus pyrotechnischem Material in einer Stärke von weniger als 100 µm hergestellt wird.

3. Mikrosystem (7, 1') nach Anspruch 1 oder 2, **dadurch gekennzeichnet, dass** das Substrat ausgehend von einer Zusammenfügung von übereinander liegenden Schichten (71, 72, 73, 74 und 10, 11, 12) hergestellt wird.

4. Mikrosystem (7, 1') nach Anspruch 3, **dadurch gekennzeichnet, dass** die Beschichtung (721', 13) aus pyrotechnischem Material eine der übereinander liegenden Schichten (71, 72, 73, 74 und 10, 11, 12) bildet.

5. Mikrosystem (7, 1') nach Anspruch 4, **dadurch gekennzeichnet, dass** die Beschichtung (721', 13) aus pyrotechnischem Material als Bindemittel für die Zusammenfügung einer Schicht(72, 10), die sich über der Beschichtung (721', 13) befindet, mit einer Schicht (73, 11) dient, die sich unter der Beschichtung (721', 13) befindet.

6. Mikrosystem (7, 1') nach Anspruch 1, **dadurch gekennzeichnet, dass** das aufgebrachte pyrotechnische Material in Form eines Lacks auf der Basis von Nitrozellulose vorliegt.

7. Mikrosystem (7, 1') nach Anspruch 6, **dadurch gekennzeichnet, dass** der Lack in einer Stärke aufgebracht wird, die nach dem Trocknen zwischen 5 und 40 µm liegt.

8. Mikrosystem (7, 1') nach Anspruch 1, **dadurch gekennzeichnet, dass** jede der Initialzündungszonen ausgehend von einem elektrischen Widerstand auf dem Substrat hergestellt werden kann.

9. Mikrosystem (7, 1') nach Anspruch 1, **dadurch gekennzeichnet, dass** jede der Initialzündungszonen in Höhe des Kontaktpunkts eines mit einem elektrischen Generator (4) verbundenen leitenden Fingers (6a, ..., 6h) auf dem Substrat aus metallischem Werkstoff hergestellt werden kann, das ebenfalls mit dem Generator (4) verbunden ist.

10. Mikrosystem (7, 1') nach Anspruch 3, **dadurch gekennzeichnet, dass** es eine verformbare Membran (710, 12) aufweist, die teilweise eine Brennkammer (720, 2a, ..., 2h) begrenzt, die dazu bestimmt ist, die Gase zu empfangen, die von mindestens einem Teil der Beschichtung (721, 721', 13) aus pyrotechnischem Material erzeugt werden, der mit einer der Initialzündungszonen in Kontakt steht.

11. Mikrosystem (7, 1') nach Anspruch 10, **dadurch gekennzeichnet, dass** es eine Schicht (72, 10) aufweist, durch die hindurch eine Öffnung gebildet wird, die die Brennkammer (720, 2a, ..., 2h) bildet, wobei die Schicht (72, 10) zwischen der Membran (710, 12), die selbst eine Schicht bildet, und der Beschichtung aus pyrotechnischem Material (721', 13) eingefügt ist.

12. Herstellungsverfahren eines Mikrosystems (1'), das eine Vielzahl von benachbarten pyrotechnischen Mikrostellgliedern (1a, ..., 1h) aufweist, die auf einem Substrat angesiedelt sind, wobei jedes Mikrostellglied (1a, ..., 1h) aufgrund der durch die Verbrennung eines pyrotechnischen Materials, das ausgehend von einer jedem Mikrostellglied (1a, ..., 1h) zugeordneten elektrischen Initialzündungszone initialgezündet wird, erzeugten Gase eine bestimmte Wirkung haben kann, **dadurch gekennzeichnet, dass** eine Schicht (13) aus pyrotechnischem Material, die allen Mikrostellgliedern (1a, ..., 1h) gemeinsam ist, auf das Substrat in einer Stärke aufgebracht wird, die gering genug ist, damit die Initialzündung des pyrotechnischen Materials in einer Initialzündungszone lokalisiert bleibt und sich nicht bis zur anderen Initialzündungszone ausbreitet, aber ausreichend ist, um eine bestimmte Gasmenge zu erzeugen.

13. Verfahren nach Anspruch 12, **dadurch gekennzeichnet, dass** es nur aus einem Stapeln von übereinander liegenden Schichten (10, 11, 12) besteht, wobei die Schicht (13) aus pyrotechnischem Material eine der Schichten des Stapels bildet.

14. Verfahren nach Anspruch 12 oder 13, **dadurch gekennzeichnet, dass** die Schicht (13) aus pyrotechnischem Material in einer Stärke von weniger als 100 µm aufgebracht wird.

15. Verfahren nach einem der Ansprüche 12 bis 14, **dadurch gekennzeichnet, dass** die Schicht (13) aus pyrotechnischem Material durch Beschichten, Siebdruck, Tampondruck, Tauchbeschichtung oder Zerstäuben aufgebracht wird.
